# EUROPÄISCHE PATENTANMELDUNG

(11) **EP 2 902 683 A1**
(43) Veröffentlichungstag der Anmeldung: **05.08.2015**
(21) Anmeldenummer: 15151580.6
(22) Anmeldetag: 19.01.2015
(51) Int. Cl.: F16K 31/44, F16K 1/12

(54) **Absperrarmatur**

(30) Priorität: 04.02.2014 DE 202014000898 U
(71) Anmelder: Pipe Systems GmbH, 27356 Rotenburg (DE)
(72) Erfinder: Klee,, Klaus, 27356 Rotenburg (DE); Lüdemann,, Torsten, 27356 Rotenburg (DE)
(74) Vertreter: Eisenführ Speiser

(57) **Zusammenfassung**

Die Erfindung betrifft eine Absperrarmatur und eine Hausanschlussarmatureinheit. Die Absperrarmatur umfasst einen Durchflusskanal, der eine erste und eine zweite Fluidöffnung miteinander verbindet, und ein im Durchflusskanal angeordnetes Ventil, umfassend einen Ventilsitz und einen relativ zu dem Ventilsitz bewegbaren Ventilkörper, welcher in einer ersten, geschlossenen Stellung dichtend auf dem Ventilsitz aufliegt und den Durchflusskanal versperrt und in einer zweiten, geöffneten Stellung einen Durchflussquerschnitt zwischen Ventilsitz und Ventilkörper ausbildet und den Durchflusskanal freigibt, sowie Betätigungsmittel zum Erzeugen einer Relativbewegung zwischen Ventilkörper und Ventilsitz, wobei die erste Fluidöffnung an einem ersten Gehäuserohrabschnitt angeordnet ist, in dem ein sich von der ersten Fluidöffnung erstreckender erster Abschnitt des Durchflusskanals ausgebildet ist, die zweite Fluidöffnung an einem zweiten Gehäuserohrabschnitt angeordnet ist, in dem ein sich von der zweiten Fluidöffnung erstreckender zweiter Abschnitt des Durchflusskanals ausgebildet ist, zwischen dem ersten und dem zweiten Gehäuserohrabschnitt ein Hauptgehäuserohrabschnitt angeordnet ist, in dem sich ein Zwischenabschnitt des Durchflusskanals erstreckt.

## Beschreibung

Die Erfindung betrifft eine Absperrarmatur, umfassend einen Durchflusskanal, der eine erste und eine zweite Fluidöffnung miteinander verbindet, und ein im Durchflusskanal angeordnetes Ventil, umfassend einen Ventilsitz und einen relativ zu dem Ventilsitz bewegbaren Ventilkörper, welcher in einer ersten, geschlossenen Stellung dichtend auf dem Ventilsitz aufliegt und den Durchflusskanal versperrt und in einer zweiten, geöffneten Stellung einen Durchflussquerschnitt zwischen Ventilsitz und Ventilkörper ausbildet und den Durchflusskanal freigibt, sowie Betätigungsmittel zum Erzeugen einer Relativbewegung zwischen Ventilkörper und Ventilsitz.

Solche Armaturen finden ihre allgemeine Anwendung dort, wo es darum geht, den Fluss durch eine fluidführende Leitung, insbesondere eine flüssigkeitsführende Leitung, wahlweise freizugeben oder zu unterbrechen. Absperrarmaturen unterliegen dabei vielfältigen Beanspruchungen und müssen neben der bloßen Sperrwirkung weitere Funktionen erfüllen. Beispielsweise können auf in Leitungssystemen installierte Absperrarmaturen verschiedene Kräfte wirken, welche die langfristige Funktionsfähigkeit der Armaturen beeinflussen können. Beim Einsatz von Absperrarmaturen in Wasserzähler-Garnituren beispielsweise, bei denen meist je eine Absperrarmatur vor und nach einem Wasserzähler gesetzt ist, werden die Absperrarmaturen von einem Wasserzählerbügel gehalten, der stabil ausgeführt ist, um auf die Armaturen wirkende Kräfte aufzunehmen. Eine solche Absperrarmatur ist beispielsweise aus der WO 2008/067988 A1 bekannt.

Ferner können Absperrarmaturen als einzelnes Absperrorgan oder Einzelregulierventil eingesetzt werden, beispielsweise als Absperrorgan vor Warmwasserspeichern. In diesem Anwendungsbereich bestehen durch die hohen Temperaturen Probleme beispielsweise hinsichtlich der Ablagerung von Kalk. Existierende Absperrarmaturen weisen ferner häufig Nachteile hinsichtlich ihrer langfristigen, zuverlässigen Funktionsfähigkeit auf.

Es ist daher eine Aufgabe der vorliegenden Erfindung, eine Absperrarmatur bereitzustellen, welche einen oder mehrere der genannten Nachteile vermeidet oder zumindest verringert. Insbesondere ist es eine Aufgabe der vorliegenden Erfindung, eine Absperrarmatur bereitzustellen, welche eine verbesserte Zuverlässigkeit hinsichtlich ihrer Funktionsfähigkeit aufweist.

Diese Aufgabe wird erfindungsgemäß gelöst durch eine Absperrarmatur, umfassend einen Durchflusskanal, der eine erste und eine zweite Fluidöffnung miteinander verbindet, und ein im Durchflusskanal angeordnetes Ventil, umfassend einen Ventilsitz und einen relativ zu dem Ventilsitz bewegbaren Ventilkörper, welcher in einer ersten, geschlossenen Stellung dichtend auf dem Ventilsitz aufliegt und den Durchflusskanal versperrt und in einer zweiten, geöffneten Stellung einen Durchflussquerschnitt zwischen Ventilsitz und Ventilkörper ausbildet und den Durchflusskanal freigibt, sowie Betätigungsmittel zum Erzeugen einer Relativbewegung zwischen Ventilkörper und Ventilsitz, wobei die erste Fluidöffnung an einem ersten Gehäuserohrabschnitt angeordnet ist, in dem ein sich von der ersten Fluidöffnung erstreckender erster Abschnitt des Durchflusskanals ausgebildet ist, die zweite Fluidöffnung an einem zweiten Gehäuserohrabschnitt angeordnet ist, in dem ein sich von der zweiten Fluidöffnung erstreckender zweiter Abschnitt des Durchflusskanals ausgebildet ist, zwischen dem ersten und dem zweiten Gehäuserohrabschnitt ein Hauptgehäuserohrabschnitt angeordnet ist, in dem sich ein Zwischenabschnitt des Durchflusskanals erstreckt, wobei ferner der erste Gehäuserohrabschnitt und der Hauptgehäuserohrabschnitt fest verbunden oder einstückig ausgebildet sind und der zweite Gehäuserohrabschnitt und der Hauptgehäuserohrabschnitt fest verbunden oder einstückig ausgebildet sind, und die Betätigungsmittel derart beweglich am Hauptgehäuserohrabschnitt angeordnet sind, dass eine Betätigung der Betätigungsmittel eine Relativbewegung zwischen Ventilsitz und Ventilkörper in Richtung einer Längsachse des Hauptgehäuserohrabschnitts erzeugt.

Die erfindungsgemäße Absperrarmatur zeichnet sich dadurch aus, dass die für die Öffnungs- und Schließbewegung des Ventils erforderliche Bewegung abgekoppelt ist von der strukturellen, tragenden Verbindung eines die erste und zweite Fluidöffnung verbindenden Gehäuserohrs. Um dies zu realisieren, sieht die erfindungsgemäße Absperrarmatur vor, dass die beiden Gehäuserohrabschnitte, an denen die erste und zweite Fluidöffnung ausgebildet sind, mit dem dazwischen angeordneten Hauptgehäuserohrabschnitt fest verbunden oder einstückig sind.

Unter einer festen Verbindung zwischen dem ersten Gehäuserohrabschnitt und dem Hauptgehäuserohrabschnitt sowie zwischen dem zweiten Gehäuserohrabschnitt und dem Hauptgehäuserohrabschnitt ist insbesondere eine Verbindung zu verstehen, bei der die Gehäuseabschnitte direkt oder unmittelbar mit dem Hauptgehäuserohrabschnitt verbunden sind. Insbesondere sind die beiden Gehäuserohrabschnitte mit dem Hauptgehäuserohrabschnitt vorzugsweise unbeweglich verbunden, das heißt derart, dass keine Relativbewegung zwischen diesen Teilen erfolgt. Insbesondere sind die Gehäuserohrabschnitte mit dem Hauptgehäuserohrabschnitt nicht über bewegliche Elemente miteinander verbunden, insbesondere nicht über bewegliche Elemente, die für den Öffnungs- und/oder Schließvorgang des Ventils bewegt werden müssen. Die Verbindung zwischen den beiden Gehäuserohrabschnitten und dem Hauptgehäuserohrabschnitt ist insbesondere derart ausgebildet, dass sie im Wesentlichen keine relative Verschiebung und/oder relative Neigung der Längsachsen der Gehäuserohrabschnitte und des Hauptgehäuserohrabschnitts zueinander, insbesondere auch nicht unter äußerer, im normalen Betriebszustand der Absperrarmatur auftretender Krafteinwirkung, erlaubt. Die feste Verbindung zwischen den beiden Gehäuserohrabschnitten und dem Hauptgehäuserohrabschnitt ist vorzugsweise fluiddicht, insbesondere dicht gegenüber dem Fluid, insbesondere der Flüssigkeit, die im Durchflusskanal geführt und die durch das Ventil gesperrt werden soll. Die Verbindung kann vorzugsweise lösbar oder nicht lösbar ausgebildet sein.

Die erfindungsgemäße Absperrarmatur hat mehrere Vorteile. Insbesondere kann durch die feste Verbindung der beiden Gehäuserohrabschnitte mit dem Hauptgehäuserohrabschnitt oder die einstückige Ausbildung verhindert werden, dass die für die Öffnungs- und Schließbewegung erforderliche längsverschiebliche Bewegung der Betätigungsmittel blockiert oder schwergängig wird. Die Erfindung beruht unter anderem auf der Erkenntnis, dass es bei existierenden Absperrarmaturen insbesondere bei Einwirkung äußerer Kräfte auf die Gehäuserohrabschnitte dazu kommen kann, dass die Betätigungsmittel verkanten, wenn diese eine kraftübertragende Verbindung zwischen den beiden Gehäuserohrabschnitten oder einem Gehäuserohrabschnitt und dem Hauptgehäuserohrabschnitt herstellen. Eine solche Verkantung oder Verklemmung der für die Öffnungs- und Schließbewegung erforderlichen beweglichen Teile zwischen den beiden Gehäuserohrabschnitten bzw. einem Gehäuserohrabschnitt und dem Hauptgehäuserohrabschnitt kann in der erfindungsgemäßen Absperrarmatur vermieden oder zumindest reduziert werden, da hier die feste Verbindung bzw. einstückige Ausbildung des Hauptgehäuserohrabschnitts mit den beiden Gehäuserohrabschnitten sicherstellt, dass von außen auf die Gehäuserohrabschnitte einwirkende Kräfte direkt über den fest mit diesen verbundenen bzw. einstückig mit diesen ausgebildeten Hauptgehäuserohrabschnitt übertragen werden und somit keine Verkantung oder Verklemmung der Betätigungsmittel und ggf. weiterer zur Öffnungs- bzw. Schließbewegung erforderlicher beweglicher Teile erfolgt. Damit wird die Betriebssicherheit und langfristige zuverlässige Funktionssicherheit der Absperrarmatur erhöht.

Beim Einsatz der Absperrarmatur beispielsweise in einer Wasserzählergarnitur kann somit der Wasserzählerbügel leichter ausgebildet sein, da er geringere Anforderungen zur Aufnahme von von außen wirkenden Kräften erfüllen muss. Ferner reduziert sich der Montageaufwand, da auch die axiale Ausrichtung der Armaturen und der Wasseruhr an Relevanz für die Funktionssicherheit und das Verhindern von Blockaden verliert.

Insbesondere kann die erfindungsgemäße Armatur auch als einzelnes Absperrorgan oder Einzelregulierventil eingesetzt, ohne dass die Absperrarmatur in besonderer Weise spannungsfrei bzw. abgestützt montiert werden müsste.

Durch die feste Verbindung oder einstückige Ausbildung der Gehäuserohrabschnitte mit dem Hauptgehäuserohrabschnitt wird somit sichergestellt, dass von außen einwirkende Kräfte keinen wesentlichen Einfluss auf die für die Öffnungs- und Schließbewegung erforderlichen Teile, insbesondere die Betätigungsmittel und vorzugsweise den Ventilkörper, haben, und somit eine Blockade oder Schwergängigkeit vermieden werden kann. Damit wird sowohl der Einsatzbereich als auch die Zuverlässigkeit und einfache Bedienbarkeit der Absperrarmatur erhöht.

Die erfindungsgemäße Absperrarmatur ist bezüglich ihrer Durchströmungsrichtung nicht richtungsgebunden, das bedeutet, dass sowohl die erste als auch die zweite Fluidöffnung als Einlass- und Auslassöffnung dienen können.

Der Ventilkörper der Absperrarmatur ist vorzugsweise ein drehbar gelagerter Kegel bzw. Dichtungskegel. Der Ventilsitz weist vorzugsweise ein Dichtungselement auf, insbesondere eine Teflondichtung. Ferner weist der Ventilsitz vorzugsweise einen Absatz auf für eine Kontaktdichtung zwischen dem Ventilkörper und dem Absatz im Falle eines Versagens des Dichtungselements. Die Kontaktdichtung ist vorzugsweise eine Metall-auf-Metall-Dichtung, d.h. dass vorzugsweise mindestens der Absatz des Ventilsitzes und der Ventilkörper aus Metall ausgebildet sind. Der Ventilsitz ist vorzugsweise am zweiten Gehäuserohrabschnitt ausgebildet.

Die Betätigungsmittel sind vorzugsweise außenumfänglich an der Absperrarmatur, insbesondere außenumfänglich im/am Hauptgehäuserohrabschnitt angeordnet, so dass sie von einem Bediener leicht erreicht werden können. Die Betätigungsmittel werden vorzugsweise über eine Dreh- bzw. Schraubbewegung um die Längsachse des Hauptgehäuserohrabschnitts betätigt, um eine axiale Bewegung, vorzugsweise des Ventilkörpers, in Richtung der Längsachse des Hauptgehäuserohrabschnitts zu erzeugen.

Der erste Gehäuserohrabschnitt, der zweite Gehäuserohrabschnitt, der Hauptgehäuserohrabschnitt, der Ventilkörper und/oder der Ventilsitz sind vorzugsweise aus Metall ausgebildet. Die beiden Gehäuserohrabschnitte und/oder der Hauptgehäuserohrabschnitt sind vorzugsweise im Wesentlichen rohr- oder hohlzylinderförmig ausgebildet. Der Durchflusskanal ist vorzugsweise im Wesentlichen zylinderförmig.

Die zum Schließen und Öffnen des Ventils erforderliche Relativbewegung zwischen Ventilsitz und Ventilkörper verläuft in Richtung der Längsachse des Hauptgehäuserohrabschnitts und wird vorzugsweise durch eine Rotation oder Schraubbewegung der Betätigungsmittel um die Längsachse des Hauptgehäuserohrabschnitts erzeugt. Die beiden Gehäuserohrabschnitte, der Hauptgehäuserohrabschnitt, die Betätigungsmittel, der Ventilkörper und/oder das Ventilgehäuse sind vorzugsweise koaxial angeordnet. Ferner vorzugsweise fallen die jeweiligen Längsachsen der beiden Gehäuserohrabschnitte, des Hauptgehäuserohrabschnitts, der Betätigungsmittel, des Ventilsitzes und/oder des Ventilkörpers zusammen.

Bevorzugt wird der Abstand zwischen der ersten und zweiten Fluidöffnung durch eine Betätigung der Betätigungsmittel, das heißt beim Schließen und Öffnen des Ventils, nicht verändert. Dies bedeutet, dass der Abstand zwischen der ersten und der zweiten Fluidöffnung in geöffneter und geschlossener Stellung des Ventils vorzugsweise im Wesentlichen gleich ist.

Im Bereich der beiden Fluidöffnungen weisen die beiden Gehäuserohrabschnitte vorzugsweise je einen Anschluss auf, um die Absperrarmatur beispielsweise in einem Leitungssystem anschließen zu können. Der Anschluss des ersten und/oder zweiten Gehäuserohrabschnitts kann beispielsweise ein Innengewindeanschluss, Außengewindeanschluss, Pressanschluss, vorzugsweise mit Muffen, oder eine Kombination solcher oder ähnlicher Anschlüsse sein. Der Hauptgehäuserohrabschnitt kann vorzugsweise einen Entleerungsstutzen zur gezielten Entleerung des Ventils aufweisen.

In einer bevorzugten Ausgestaltung der Absperrarmatur ist vorgesehen, dass der erste und zweite Gehäuserohrabschnitt mit dem Hauptgehäuserohrabschnitt formschlüssig und/oder stoffschlüssig verbunden sind, vorzugsweise durch eine Schraubverbindung und/oder eine Klebeverbindung. Besonders bevorzugt ist eine, vorzugsweise verklebte, Schraubverbindung zwischen den beiden Gehäuserohrabschnitten und dem Hauptgehäuserohrabschnitt. Vorzugsweise weist der erste Gehäuserohrabschnitt einen Außengewindeabschnitt auf, der in einen Innengewindeabschnitt des Hauptgehäuserohrabschnitts eingreift. Der zweite Gehäuserohrabschnitt weist vorzugsweise einen Außengewindeabschnitt auf, der in einen Innengewindeabschnitt des Hauptgehäuserohrabschnitts eingreift. Ferner könnte der erste Gehäuserohrabschnitt und/oder der zweite Gehäuserohrabschnitt einstückig mit dem Hauptgehäuserohrabschnitt ausgebildet sein. Bevorzugt ist, dass bei einer einstückigen Ausbildung entweder der erste oder der zweite Gehäuserohrabschnitt einstückig mit dem Hauptgehäuserohrabschnitt ausgebildet ist, um die Montage bzw. der Zusammenbau der Absperrarmatur zu erleichtern.

In einer weiteren Ausgestaltung ist bevorzugt, dass die Betätigungsmittel mit dem Ventilkörper über eine, vorzugsweise im Wesentlichen ring- oder hohlzylinderförmige, Schiebehülse verbunden sind, welche bei einer, vorzugsweise rotatorischen, Betätigung der Betätigungsmittel eine Bewegung entlang der Längsachse des Hauptgehäuserohrabschnitts erfährt.

Die Verbindung zwischen dem Ventilkörper und den Betätigungsmitteln wird vorzugsweise durch eine Schiebehülse hergestellt, welche vorzugsweise bei einer Rotation oder Schraubbewegung der Betätigungsmittel lediglich eine axiale Bewegung entlang der Längsachse des Hauptgehäuserohrabschnitts erfährt und diese auf den Ventilkörper überträgt. Insbesondere bei der Schließbetätigung der Betätigungsmittel dient die Schiebehülse vorzugsweise dazu, den Ventilkörper entgegen dem Fluiddruck gegen den Ventilsitz zu pressen. Die Schiebehülse ist vorzugsweise innerhalb des Hauptgehäuserohrabschnitts angeordnet. Besonders bevorzugt ist ferner, dass mindestens ein Abschnitt der Schiebehülse in bezogen auf die Längsachse des Hauptgehäuserohrabschnitts radialer Richtung zwischen dem Hauptgehäuserohrabschnitt und einem Teil des ersten Gehäuserohrabschnitts angeordnet ist.

Ferner ist bevorzugt, dass die Schiebehülse gegenüber dem ersten Gehäuserohrabschnitt und/oder dem Hauptgehäuserohrabschnitt durch mindestens ein Dichtungselement, vorzugsweise radiale Ringdichtung, insbesondere einen O-Ring, vorzugsweise zwei O-Ringe, abgedichtet ist. Diese und weitere in der Beschreibung oder in den Ansprüchen genannten Dichtungen sind vorzugsweise fluiddicht, insbesondere flüssigkeitsdicht, und insbesondere dicht gegenüber dem Fluid bzw. Medium, welches im Durchflusskanal der Absperrarmatur geführt und durch das Ventil gesperrt werden soll.

Eine weitere bevorzugte Ausgestaltung der Absperrarmatur sieht vor, dass die Schiebehülse einen, vorzugsweise zwei, drei oder mehrere, radial nach außen ragende Zapfen aufweist, welche durch mindestens eine, vorzugsweise geschlitzte, Ausnehmung im Hauptgehäuserohrabschnitt ragen.

Die Anzahl der Ausnehmungen im Hauptgehäuserohrabschnitt entspricht vorzugsweise der Anzahl der Zapfen der Schiebehülse. Die Ausnehmung im Hauptgehäuserohrabschnitt kann beispielsweise die Form eines Langlochs haben, wobei das Langloch in seiner axialen Ausdehnung mindestens dem Öffnungs- und Schließweg des Ventils bzw. des Ventilkörpers entspricht. Die Breite bzw. Erstreckung der Ausnehmung entlang des Umfangs des Hauptgehäuserohrabschnitts ist vorzugsweise geringfügig größer als die entsprechende Ausdehnung des Zapfens. Eine geschlitzte Form der Ausnehmung kann beispielsweise darin bestehen, dass die Ausnehmung bis an ein Ende des Hauptgehäuserohrabschnitts reicht. Diese Ausgestaltung hat den Vorzug einer einfachen Montage der Absperrarmatur, insbesondere einer einfachen Montage der Schiebehülse mit den nach außen ragenden Zapfen im Inneren des Hauptgehäuserohrabschnitts.

In einer weiteren bevorzugten Ausgestaltung ist vorgesehen, dass die Betätigungsmittel mindestens ein erstes, vorzugsweise im Wesentlichen ringförmiges, Anschlagelement aufweisen, welches vorzugsweise angeordnet und ausgebildet ist, bei einer, vorzugsweise rotatorischen, Schließbetätigung der Betätigungsmittel die Schiebehülse über den bzw. die Zapfen in Richtung der Längsachse des Hauptgehäuserohrabschnitts zu bewegen.

Ferner ist bevorzugt, dass die Betätigungsmittel mindestens ein zweites, vorzugsweise im Wesentlichen ringförmiges, Anschlagelement aufweisen, welches vorzugsweise angeordnet und ausgebildet ist, bei einer, vorzugsweise rotatorischen, Öffnungsbetätigung der Betätigungsmittel die Schiebehülse über den bzw. die Zapfen in Richtung der Längsachse des Hauptgehäuserohrabschnitts zu bewegen.

Insbesondere ist ferner bevorzugt, dass das mindestens eine erste und das mindestens eine zweite Anschlagelement angeordnet und ausgebildet sind, über den bzw. die Zapfen eine Bewegung der Schiebehülse entlang der Längsachse des Hauptgehäuserohrabschnitts relativ zu den Betätigungsmitteln in entgegengesetzter Richtung zu begrenzen.

Der bzw. die Zapfen der Schiebehülse ragen durch die Ausnehmung(en) des Hauptgehäuserohrabschnitts radial nach außen, vorzugsweise in einen Raum zwischen dem mindestens ersten und dem mindestens zweiten Anschlagelement der Betätigungsmittel. Vorzugsweise sind die Zapfen mit Spiel in den Ausnehmungen angeordnet und ggf. in dem Raum zwischen dem mindestens ersten und dem mindestens zweiten Anschlagelement, d.h. vorzugsweise frei von Klemmungen. Die Anschlagelemente können vorzugsweise als an den Betätigungsmitteln ausgebildeter, vorzugsweise radial nach innen ragender Ring ausgebildet sein. Die Betätigungsmittel sind vorzugsweise so angeordnet, dass die daran angeordneten Anschlagelemente mit dem bzw. den Zapfen in Eingriff kommen können bzw. eine Anschlagfläche in axialer Richtung für den bzw. die Zapfen bieten können. Bei einer Betätigung der Betätigungsmittel, insbesondere bei der Schließbetätigung, nimmt somit vorzugsweise das erste Anschlagelement den bzw. die Zapfen der Schiebehülse bezüglich des translatorischen Anteils der Bewegung mit und versetzt die Schiebehülse somit in eine axiale Bewegung. Bei der Öffnungsbetätigung der Betätigungsmittel kann ein Mitnehmen des bzw. der Zapfen durch das zweite Anschlagelement in entgegengesetzter axialer Richtung erfolgen, die axiale Öffnungsbewegung des Ventilkörpers und damit auch der Schiebehülsen kann auch durch den Fluid- bzw. Mediumdruck unterstützt werden.

Eine weitere bevorzugte Ausgestaltung der Absperrarmatur ist gekennzeichnet durch eine Verbindungshülse, welche, vorzugsweise außenumfänglich, in einem Verbindungsbereich des ersten oder zweiten Gehäuserohrabschnitts an dem Hauptgehäuserohrabschnitt angeordnet ist, und welche ferner vorzugsweise die, vorzugsweise geschlitzte, mindestens eine Ausnehmung im Hauptgehäuserohrabschnitt für den bzw. die Zapfen der Schiebehülse zumindest abschnittsweise überdeckt.

Die Verbindungshülse kann in vorteilhafter Weise dazu dienen, die Verbindung zwischen einem Gehäuserohrabschnitt und dem Hauptgehäuserohrabschnitt zu verstärken oder zu unterstützen. Insbesondere wenn der Hauptgehäuserohrabschnitt eine oder mehrere Ausnehmungen aufweist, kann die Anordnung einer Verbindungshülse bevorzugt sein, insbesondere an dem Ende des Hauptgehäuserohrabschnitts, an dem die Ausnehmung(en) ausgebildet ist bzw. sind, um die Verbindung dieses Endes des Hauptgehäuserohrabschnitts mit dem ersten oder zweiten Gehäuserohrabschnitt zu stabilisieren.

Ferner ist bevorzugt, dass die Verbindungshülse fest mit dem Hauptgehäuserohrabschnitt verbunden ist, vorzugsweise formschlüssig und/oder stoffschlüssig, insbesondere durch eine Schraub- und/oder Klebeverbindung.

Eine weitere bevorzugte Ausgestaltung ergibt sich dadurch, dass die Verbindungshülse derart angeordnet und ausgebildet ist, dass sie eine Führung, vorzugsweise in Richtung der Längsachse des Hauptgehäuserohrabschnitts, mindestens eines Teils der Betätigungsmittel darstellt. Dazu ist insbesondere bevorzugt, dass zumindest ein Teil der Verbindungshülse in bezogen auf die Längsachse des Hauptgehäuserohrabschnitts radialer Richtung zwischen dem Hauptgehäuserohrabschnitt und einem Teil der Betätigungsmittel angeordnet ist.

In einer weiteren Ausgestaltung der Absperrarmatur ist ferner bevorzugt, dass die mindestens eine Ausnehmung in dem Hauptgehäuserohrabschnitt und/oder die Verbindungshülse einen Anschlag für eine Bewegung des bzw. der Zapfen der Schiebehülse entlang der Längsachse des Hauptgehäuserohrabschnitts relativ zu dem Hauptgehäuserohrabschnitt darstellt.

Durch solche Anschläge können vorzugsweise definierte Endpunkte für die geöffnete und/oder geschlossene Stellung des Ventils definiert werden.

Eine weitere bevorzugte Ausgestaltung der Absperrarmatur sieht vor, dass die Betätigungsmittel ein erstes, im Wesentlichen ringförmiges Betätigungselement und ein zweites, im Wesentlichen ringförmiges Betätigungselement aufweisen, wobei das erste Betätigungselement einen Innengewindeabschnitt aufweist, der in einen entsprechend ausgebildeten Außengewindeabschnitt des Hauptgehäuserohrabschnitts eingreift, und das zweite Betätigungselement fest mit dem ersten Betätigungselement verbunden ist, vorzugsweise formschlüssig und/oder stoffschlüssig, insbesondere durch eine Schraub- und/oder Klebeverbindung.

Vorzugsweise weist das erste Betätigungselement ein Außengewinde auf, welches in ein entsprechend ausgebildetes Innengewinde des zweiten Betätigungselements eingreift. Die Verschraubung zwischen dem ersten und dem zweiten Betätigungselement ist vorzugsweise verklebt.

Eine zweiteilige Ausbildung der Betätigungsmittel hat insbesondere montagetechnische Vorteile. Das erste und zweite Anschlagelement sind vorzugsweise am zweiten Betätigungselement ausgebildet. Der bzw. die Zapfen der Schiebehülse ragen vorzugsweise in einen Raum zwischen den beiden Anschlagelementen des zweiten Betätigungselements.

Eine weitere bevorzugte Ausführungsform der Absperrarmatur sieht vor, dass der zweite Gehäuserohrabschnitt ein Längenausgleichselement aufweist, an dem die zweite Fluidöffnung ausgebildet ist und welches in abgedichteter Weise derart an dem zweiten Gehäuserohrabschnitt angeordnet ist, dass eine Relativbewegung des Längenausgleichselements zum zweiten Gehäuserohrabschnitt in Richtung der Längsachse des Hauptgehäuserohrabschnitts möglich ist.

Durch das Vorsehen eines Längenausgleichselements wird zum einen ermöglicht, den Abstand zwischen der ersten und der zweiten Fluidöffnung an die jeweilige Einbausituation anzupassen. Ferner ist das Längenausgleichselement am zweiten Gehäuserohrabschnitt vorzugsweise derart längsverschieblich angeordnet, dass der Abstand zwischen der ersten und der zweiten Fluidöffnung durch eine relative Bewegung zwischen dem Längenausgleichselement und dem zweiten Gehäuserohrabschnitt unabhängig von der Stellung des Ventilkörpers zum Ventilsitz veränderbar ist. Auf diese Weise können aus Krafteinwirkung resultierende Spannungen in eine (meist minimale) Relativbewegung zwischen dem Lägenausgleichselement und dem zweiten Gehäuserohrabschnitt umgesetzt werden und somit Rohrleitungen und in diese Rohrleitung eingesetzte Funktionselemente, wie beispielsweise Wasserzähler, vor unerwünschten Krafteinwirkungen geschützt und eine sichere Abdichtung der Verbindungen gewährleistet werden. Insbesondere ist es bevorzugt, dass eine relative Bewegung zwischen dem zweiten Gehäuserohrabschnitt und dem Längenausgleichselement passiv erfolgt, das heißt durch Einwirkung von äußeren Kräften auf den Gehäuserohrabschnitt bzw. den Hauptgehäuserohrabschnitt.

Das Längenausgleichselement ist vorzugsweise im Wesentlichen rohr- oder hohlzylinderförmig ausgebildet.

Ferner ist bevorzugt, dass das Längenausgleichselement an dem zweiten Gehäuserohrabschnitt lösbar befestigt ist. Es ist insbesondere bevorzugt, dass das Längenausgleichselement zu Montage-, Demontage- oder Wartungszwecken von dem zweiten Gehäuserohrabschnitt entfernt und vorzugsweise wieder angebracht werden kann. Dadurch können beispielsweise die Montage, Demontage oder der Austausch eines Rückflussverhinderungsventils, das vorzugsweise nahe der zweiten Fluidöffnung im Längenausgleichselement angeordnet sein kann, erleichtert werden.

Als Alternative zu einem separaten Rückflussverhinderungsventil kann das Ventil der Absperrarmatur auch als Rückstromverhinderungsventil ausgebildet und so angeordnet sein, dass es als Rückschlagventil einen Fluss durch den Durchflusskanal nur in einer Richtung zulässt. Vorzugsweise öffnet das Rückschlagventil automatisch, wenn der Druck auf der Eingangsseite der Absperrarmatur höher ist als der Druck auf der Ausgangsseite. Wenn der ausgangsseitige Druck höher ist oder bei Nulldurchfluss schließt das Rückschlagventil vorzugsweise mittels Krafteinwirkung einer Feder selbsttätig. Insbesondere kann eine solche Ausgestaltung erreicht werden, indem der Ventilkörper des Ventils längsbeweglich in einer Linearlagerung angeordnet wird und mittels eines elastischen Elements gegen den Ventilsitz vorgespannt und gepresst wird.

Vorzugsweise ist ferner vorgesehen, dass zumindest ein Abschnitt des Längenausgleichselements radial abgedichtet innerhalb des zweiten Gehäuserohrabschnitts angeordnet ist.

Eine besonders bevorzugte Weiterbildung ergibt sich dadurch, dass das Längenausgleichselement zwei axiale Stirnseiten aufweist, deren Flächen im Wesentlichen gleich groß sind.

Diese Fortbildungsform beruht auf der Erkenntnis, dass die Flächen der axialen Stirnseiten des Längenausgleichselements, insbesondere die freien Stirnflächen, mit dem in Durchflusskanal geführten Fluid in Kontakt stehen und dementsprechend druckbeaufschlagt sind. Die Fortbildungsform beruht auf der Erkenntnis, dass bei unterschiedlich großer Ausbildung der Flächen der Stirnseiten eine unerwünschte Krafteinwirkung entstehen kann. Durch das Ausbilden der beiden druckbeaufschlagten Flächen an den axialen Stirnseiten des Längenausgleichselements in im Wesentlichen gleicher Größe kann diese unerwünschte Krafteinwirkung vermieden bzw. reduziert werden.

Eine weitere bevorzugte Ausführungsform sieht vor, dass das Ventil als Regulierventil ausgebildet ist, wobei der Ventilkörper und/oder der Ventilsitz derart ausgebildet und angeordnet ist bzw. sind, dass das Ventil in Abhängigkeit von der Stellung der Betätigungsmittel von einer definierten Durchflussmenge durchströmbar ist. In dieser Fortbildung ist vorzugsweise die Geometrie des Ventilkörpers derart ausgebildet und ferner vorzugsweise auf die Geometrie des Ventilsitzes bzw. der Dichtung angepasst, dass das Ventil eine bestimmte Durchflussmengenkurve aufweist, d.h. in Abhängigkeit von der Stellung der Betätigungsmittel eine bestimmte Durchflussmenge das Ventil durchströmen kann. Insbesondere ist bevorzugt, dass das Ventil so ausgebildet ist, dass ein linearer Bezug zwischen der Durchflussmenge und der Stellung der Betätigungsmittel gegeben ist, insbesondere die Durchflussmenge proportionale zur Öffnung des Ventils durch Betätigung der Betätigungsmittel ansteigt. Andere Durchflussmengenkurven können jedoch je nach Anwendungsgebiet ebenfalls bevorzugt sein.

Ein weiterer Aspekt der Erfindung ist eine Hausanschlussarmatureinheit, umfassend eine mit einer der beiden Fluidöffnungen mit einem Hausfluideingang verbundene erste, zuvor beschriebene Absperrarmatur, und einen mit der anderen der beiden Fluidöffnungen der ersten Absperrarmatur verbundenen Fluidzähler. Bei dieser Anordnung wird die erfindungsgemäße Absperrarmatur als eingangsseitige Absperrarmatur in Strömungsrichtung vor einem Fluidzähler, beispielsweise einem Wasserzähler, genutzt.

Ferner ist gemäß eines weiteren Aspekts eine Hausanschlussarmatureinheit vorgesehen, umfassend eine mit einer von zwei Fluidöffnungen mit dem Hausfluideingang verbundene erste Absperrarmatur, vorzugsweise eine zuvor beschriebene Absperrarmatur, einen mit seiner Eingangsöffnung mit der anderen der beiden Fluidöffnungen der ersten Absperrarmatur verbundenen Fluidzähler und eine mit einer der beiden Fluidöffnungen mit der Auslassöffnung des Fluidzählers verbundene zweite Absperrarmatur nach einem der vorhergehenden Ansprüche. Bei dieser Ausführungsform ist die erfindungsgemäße Absperrarmatur auf der strömungsseitigen Ausgangsseite zum Fluidzähler eingesetzt. Vorzugsweise kann in dieser Anordnung auch eine erfindungsgemäße Absperrarmatur als eingangsseitige Absperrarmatur in Strömungsrichtung vor dem Fluidzähler eingesetzt werden, so dass vorzugsweise zwei erfindungsgemäße Absperrarmaturen vorgesehen sind.

Bevorzugte Ausführungsformen der Erfindung werden beispielhaft anhand der beiliegenden Figuren beschrieben. Es zeigen:
- Figur 1:: eine Seitenansicht einer ersten Ausführungsform einer erfindungsgemäßen Absperrarmatur in der geöffneten Position;
- Figur 2:: eine Draufsicht der Absperrarmatur gemäß Figur 1;
- Figur 3:: eine Frontalansicht der Absperrarmatur gemäß Figur 1;
- Figur 4:: eine perspektivische Ansicht von schräg vorne seitlich oben der Absperrarmatur gemäß Figur 1;
- Figur 5:: eine längsgeschnittene Seitenansicht der Absperrarmatur gemäß Figur 1;
- Figur 6:: eine längsgeschnittene Draufsicht der Absperrarmatur gemäß Figur 1;
- Figur 7:: eine Frontalansicht der Absperrarmatur gemäß Figur 1 mit Kennzeichnung der Schnittebene A-A;
- Figuren 8 bis 14:: den Figuren 1 bis 7 entsprechende Abbildungen der Absperrarmatur gemäß Figur 1 in der geschlossenen Position;
- Figur 15:: eine Frontalansicht einer Wasserzählergarnitur mit einer zweiten und dritten Ausführungsform erfindungsgemäßer Absperrarmaturen;
- Figur 16:: eine Draufsicht auf die Wasserzählergarnitur gemäß Figur 15;
- Figur 16a:: einen Längsschnitt der Wasserzählergarnitur gemäß Figur 16;
- Figur 17:: eine perspektivische Ansicht von schräg vorne seitlich oben der Wasserzählergarnitur gemäß Figur 15;
- Figur 18:: Befestigungsmittel für die Wasserzählergarnitur gemäß Figur 15;
- Figur 19:: ein Entleerungsventil für eine der Absperrarmaturen der Wasserzählergarnitur gemäß Figur 15;
- Figur 20:: einen Sicherungsring für eine der Absperrarmaturen der Wasserzählergarnitur gemäß Figur 15;
- Figur 21:: ein Rückflussverhinderungsventil für eine der Absperrarmaturen der Wasserzählergarnitur gemäß Figur 15;
- Figur 22:: eine Verplombung der Wasserzählerarmatur gemäß Figur 15;
- Figuren 23 bis 25:: den Figuren 15 bis 17 entsprechende Ansichten der Wasserzählergarnitur ohne die beiden Absperrarmaturen;
- Figur 26:: einen Längsschnitt durch ein Halteelement der Wasserzählerarmatur gemäß Figur 15;
- Figur 27:: eine Seitenansicht einer zweiten Ausführungsform einer erfindungsgemäßen Absperrarmatur in der geöffneten Position;
- Figur 28:: eine Draufsicht der Absperrarmatur gemäß Figur 27;
- Figur 29:: eine Frontalansicht der Absperrarmatur gemäß Figur 27;
- Figur 30:: eine perspektivische Ansicht von schräg vorne seitlich oben der Absperrarmatur gemäß Figur 27;
- Figur 31:: eine perspektivische Ansicht von schräg hinten seitlich oben der Absperrarmatur gemäß Figur 27;
- Figur 32:: eine längsgeschnittene Seitenansicht der Absperrarmatur gemäß Figur 27;
- Figur 33:: eine längsgeschnittene Draufsicht der Absperrarmatur gemäß Figur 27;
- Figur 34:: eine Frontalansicht der Absperrarmatur gemäß Figur 27 mit Kennzeichnung der Schnittebene A-A;
- Figuren 35 bis 42:: den Figuren 27 bis 34 entsprechende Abbildungen der Absperrarmatur gemäß Figur 27 in der geschlossenen Position;
- Figur 43:: eine Seitenansicht einer dritten Ausführungsform der erfindungsgemäßen Absperrarmatur mit Längenausgleichselement in der geöffneten Position;
- Figur 44:: eine Draufsicht der Absperrarmatur gemäß Figur 43;
- Figur 45:: eine Frontalansicht der Absperrarmatur gemäß Figur 43;
- Figur 46:: eine perspektivische Ansicht von schräg vorne seitlich oben der Absperrarmatur gemäß Figur 43;
- Figur 47:: eine perspektivische Ansicht von schräg hinten seitlich oben der Absperrarmatur gemäß Figur 43;
- Figur 48:: eine längsgeschnittene Seitenansicht der Absperrarmatur gemäß Figur 43;
- Figur 49:: eine längsgeschnittene Draufsicht der Absperrarmatur gemäß Figur 43;
- Figur 50:: eine Frontalansicht der Absperrarmatur gemäß Figur 43 mit Kennzeichnung der Schnittebene A-A; und
- Figuren 51 bis 58:: den Figuren 43 bis 50 entsprechende Abbildungen der Absperrarmatur gemäß Figur 43 in der geschlossenen Position.

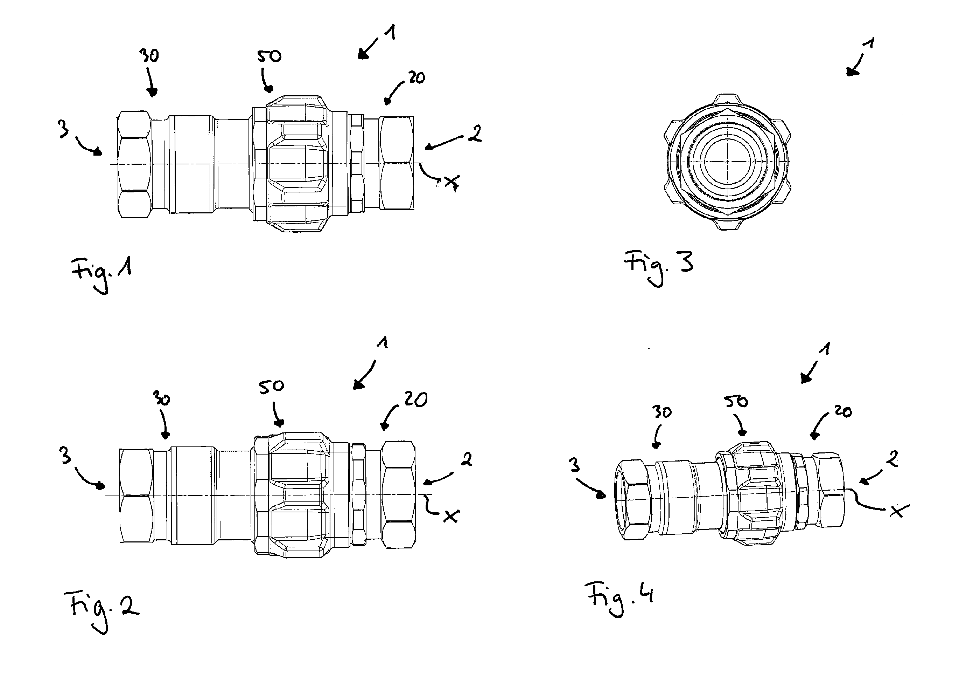

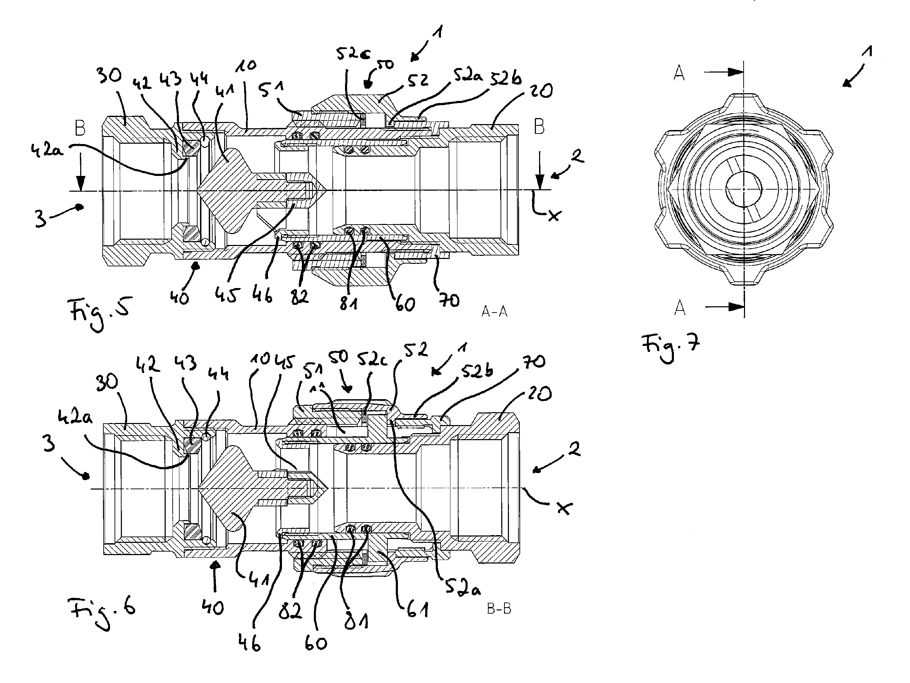

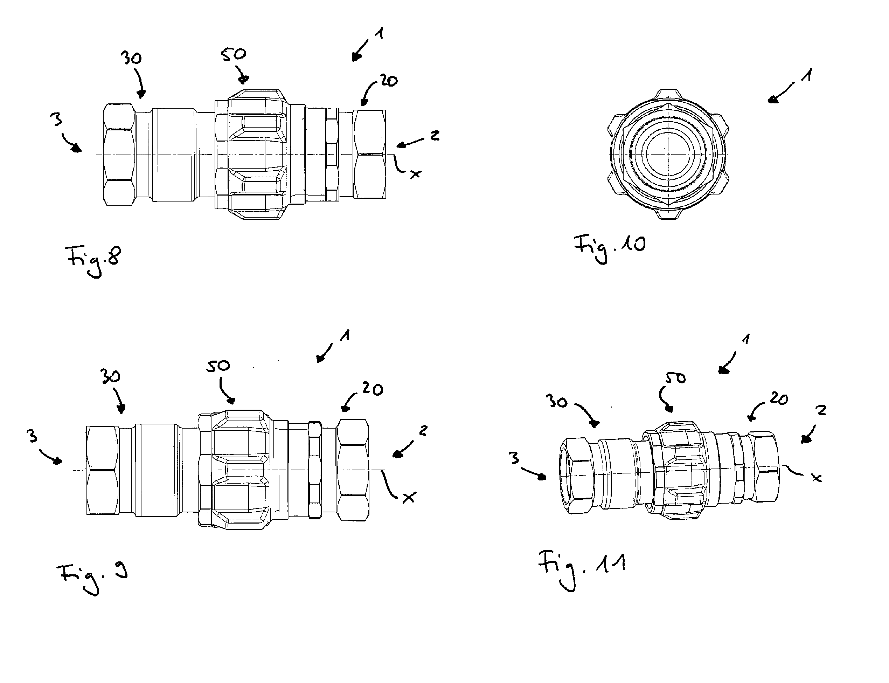

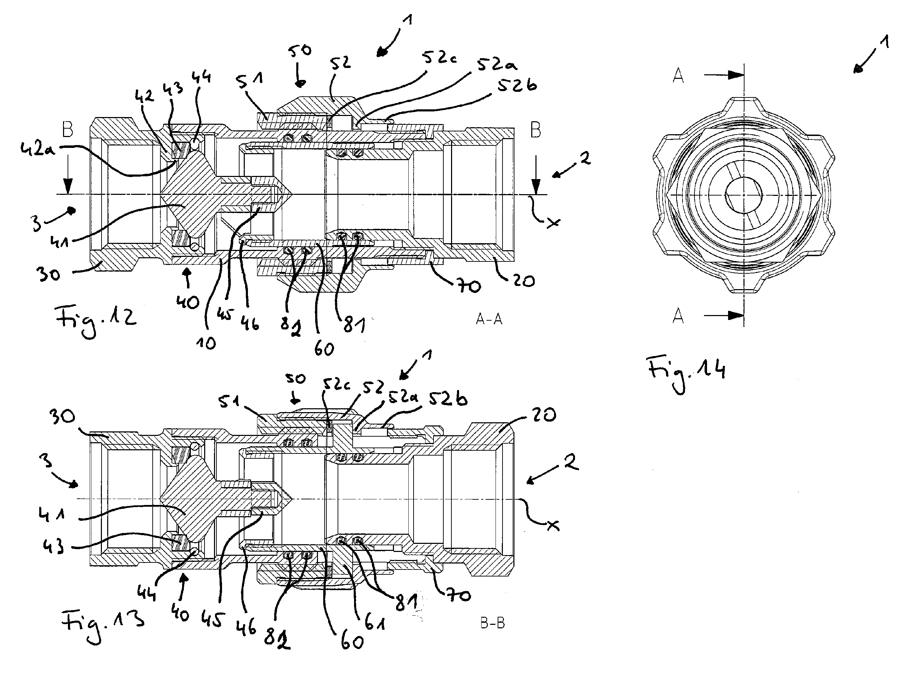

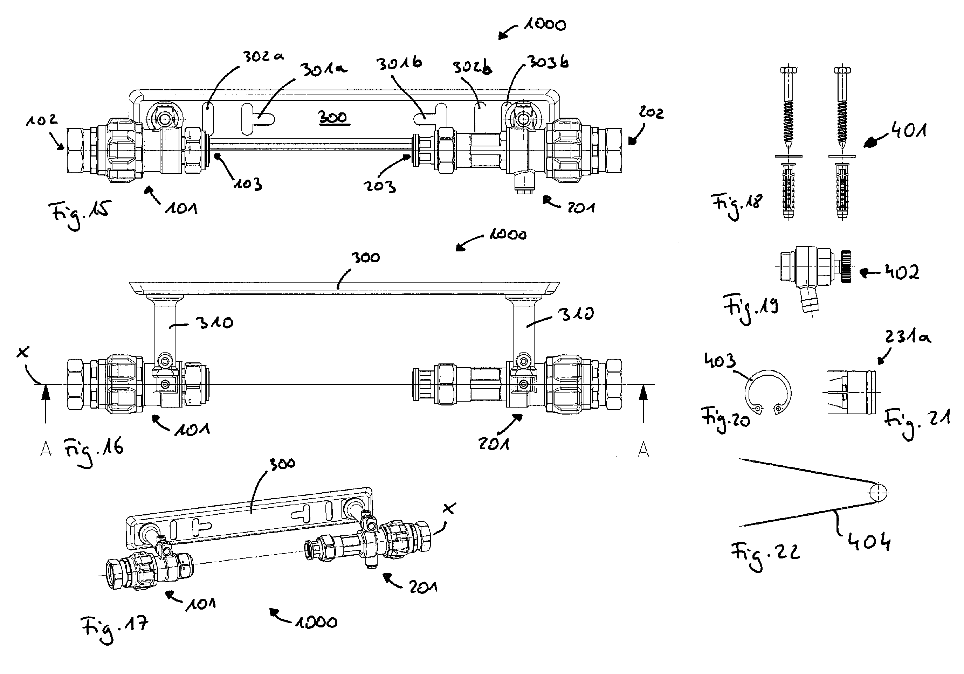

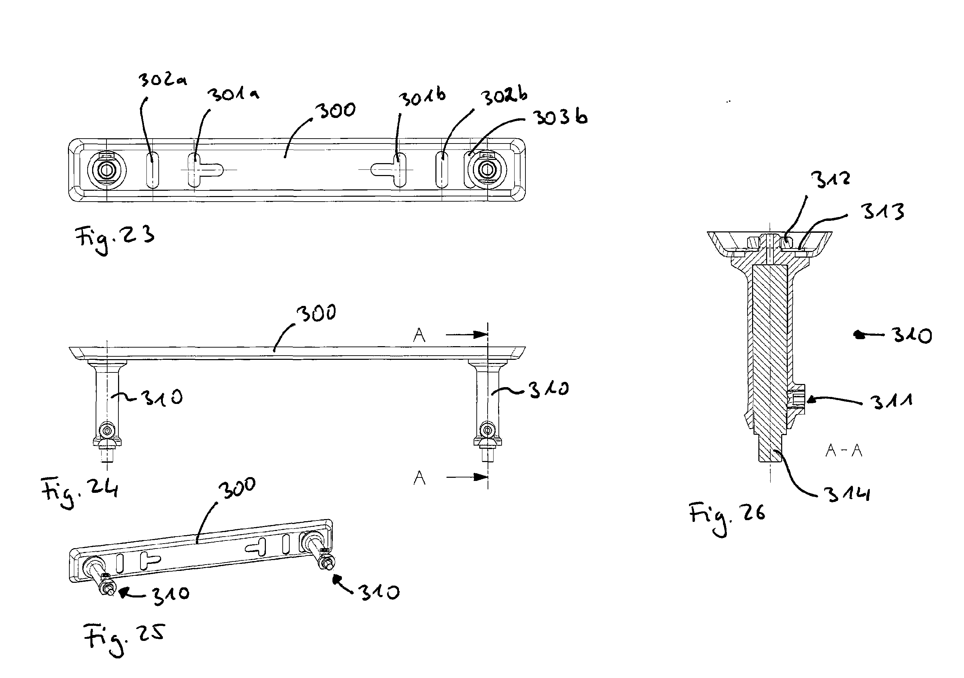

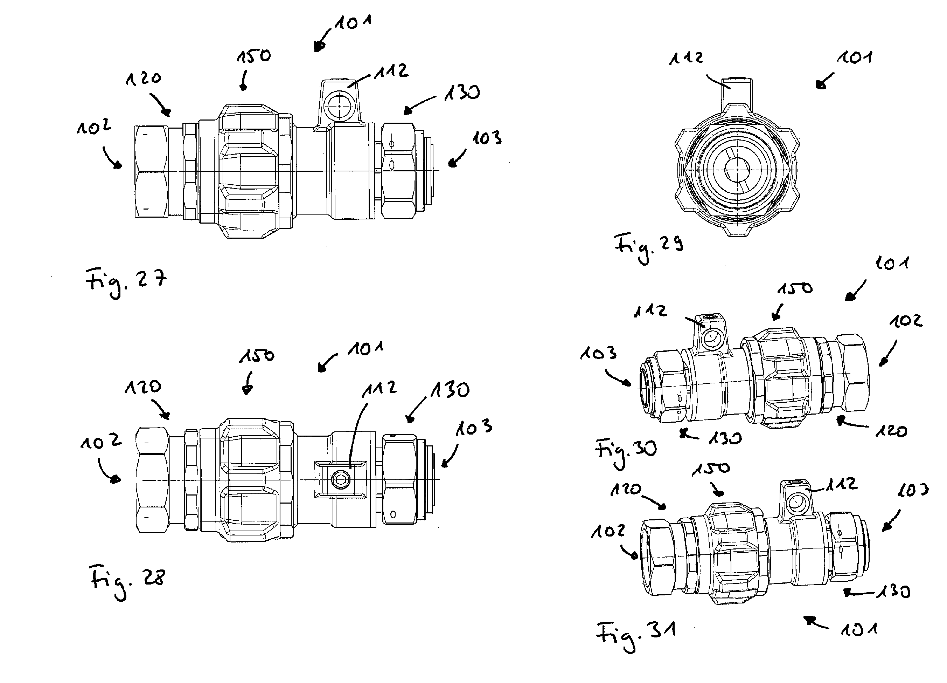

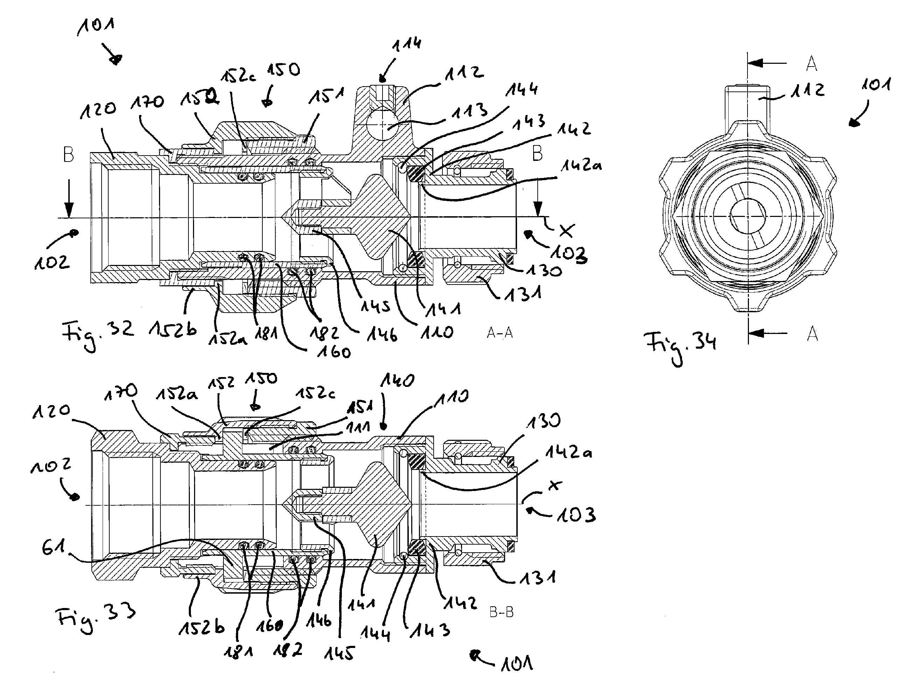

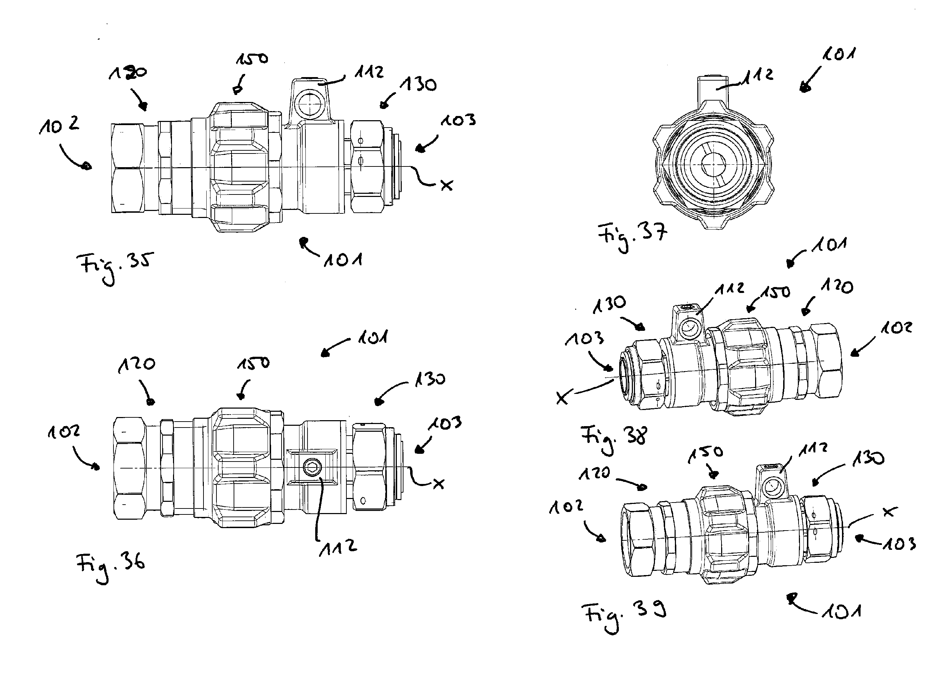

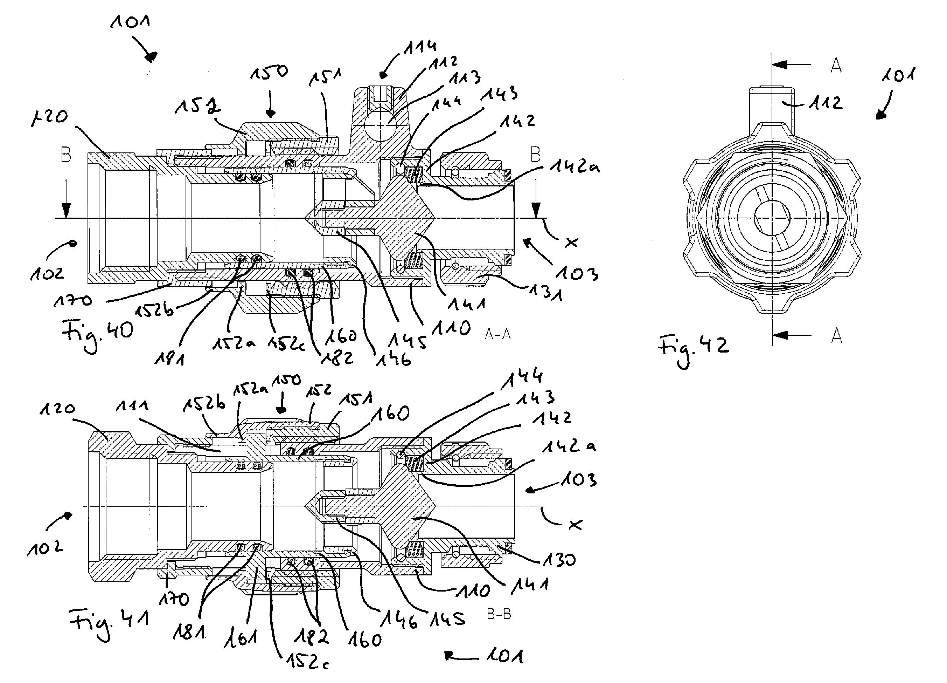

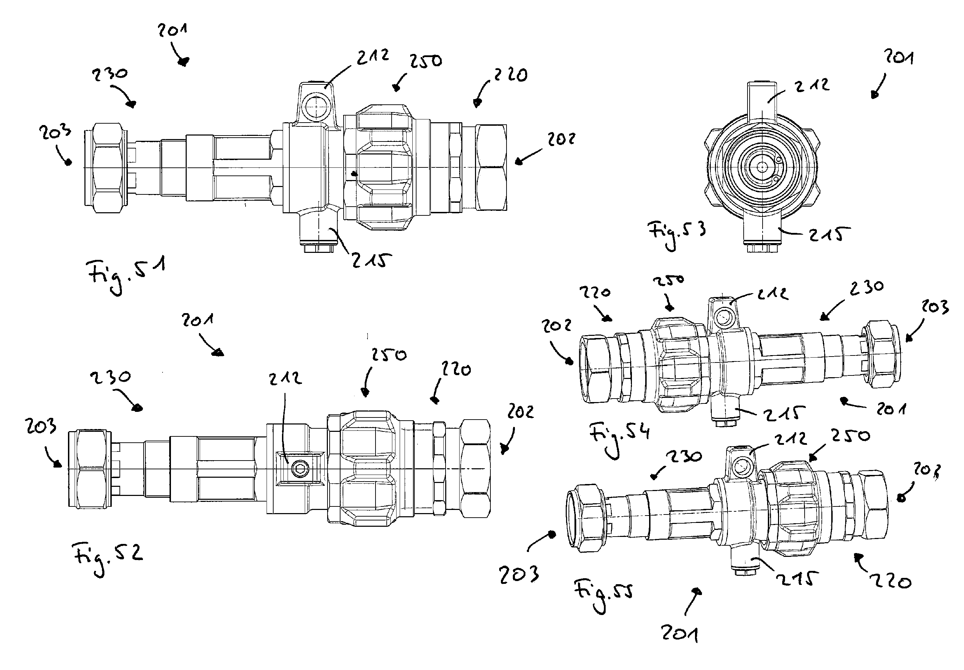

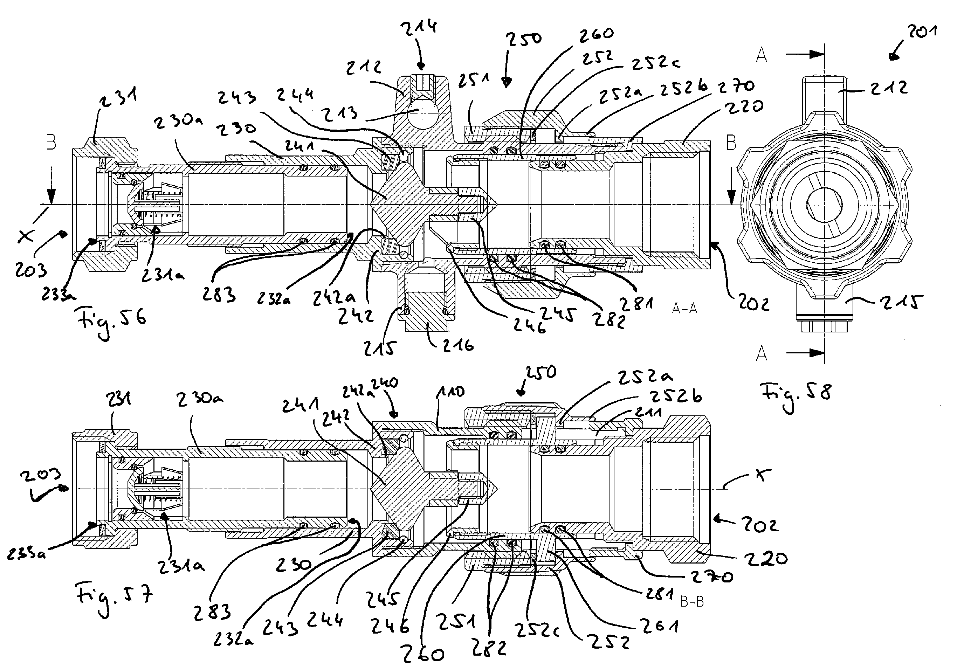

In den Figuren 1 bis 14, 27 bis 42 und 43 bis 58 sind drei unterschiedliche Ausführungsformel erfindungsgemäßer Absperrarmaturen 1, 101, 201 dargestellt. Bezugszeichen für funktionsgleiche oder ähnliche Elemente sind in der zweiten und dritten Ausführungsform gemäß den Figuren 27 bis 42 bzw. 43 bis 58 gegenüber den in den Figuren 1 bis 14 verwendeten Bezugszeichen um 100 bzw. 200 erhöht. In den Figuren 15 bis 26 ist eine Wassergarnitur 1000 dargestellt, in der Absperrarmaturen 101, 201 gemäß der in den Figuren 27 bis 42 und 43 bis 58 dargestellten zweiten und dritten Ausführungsformen zum Einsatz kommen.

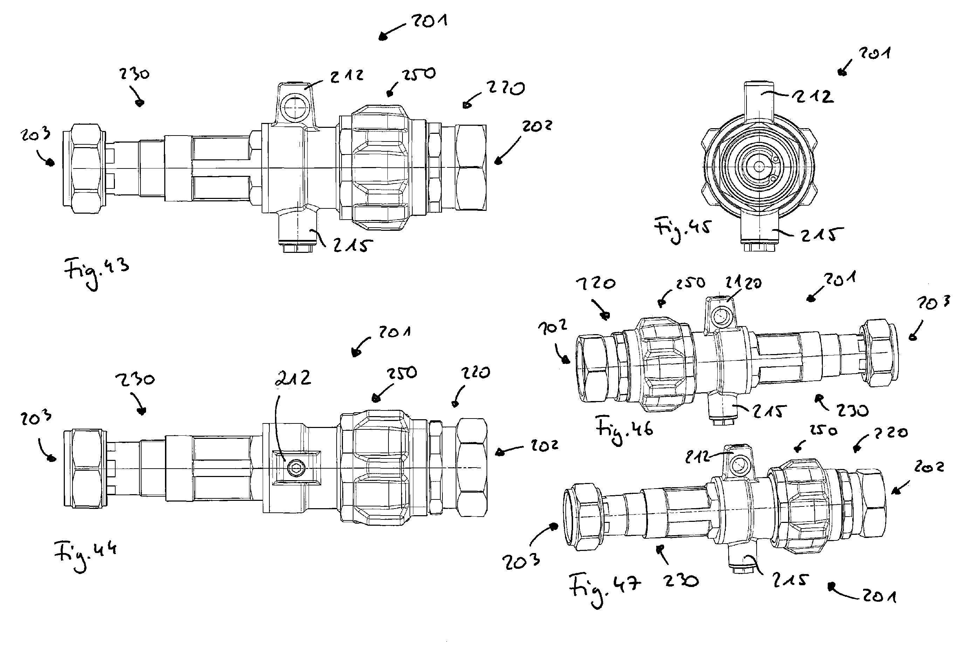

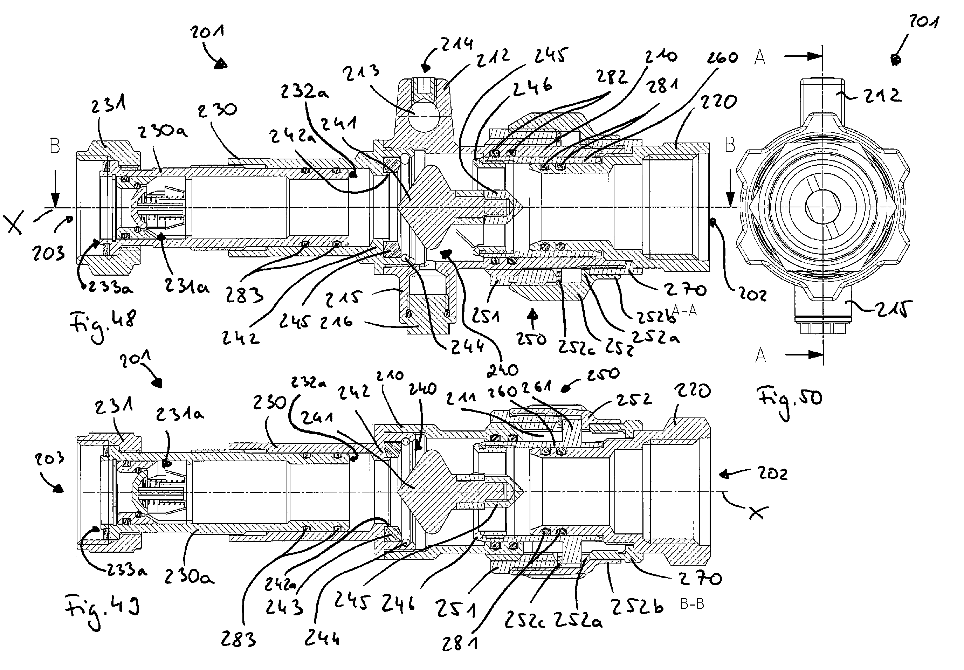

In allen drei Ausführungsformen weist die Absperrarmatur 1, 101, 201 jeweils eine erste Fluidöffnung 2, 102, 202 und eine zweite Fluidöffnung 3, 103, 203 auf. Die Absperrarmaturen 1 und 101 sind in ihrer Durchflussrichtung nicht festgelegt, das heißt sowohl die erste als auch die zweite Fluidöffnung 2, 102, 3, 103 können sowohl als Einlass- als auch als Auslassöffnung dienen. In der dritten Ausführungsform gemäß den Figuren 43 bis 58 weist die Absperrarmatur 201 ein Rückflussverhinderungsventil 231a (insbesondere in den Figuren 48, 49, 56 und 57 zu erkennen) auf, so dass in dieser Ausführungsform die zweite Fluidöffnung 203 als Einlassöffnung und die erste Fluidöffnung 202 als Auslassöffnung dienen.

Zwischen der ersten und zweiten Fluidöffnung 2, 3, 102, 103, 202, 203 ist ein Durchflusskanal ausgebildet. Der Durchflusskanal ist im Wesentlichen zylinderförmig, mit baubedingten Änderungen des Durchmessers entlang der Längsachse. Die erste Fluidöffnung 2, 102, 202 ist an einem ersten Gehäuserohrabschnitt 20, 120, 220 ausgebildet, die zweite Fluidöffnung 3, 103, 203 an einem zweiten Gehäuserohrabschnitt 30, 130, 230. Die beiden Gehäuserohrabschnitte 20, 30, 120, 130, 220, 230 sind fest mit dem dazwischen angeordneten Hauptgehäuserohrabschnitt 10, 110, 210 verbunden. Die feste Verbindung ist in den drei gezeigten Ausführungsbeispielen durch verklebte Verschraubungen zwischen dem ersten Gehäuserohrabschnitt 20, 120, 220 und dem Hauptgehäuserohrabschnitt 10, 110, 210 sowie zwischen dem zweiten Gehäuserohrabschnitt 30, 130, 230 und dem Hauptgehäuserohrabschnitt 10, 110, 210 realisiert. Die beiden Gehäuserohrabschnitte 20, 30, 120, 130, 220, 230 und der Hauptgehäuserohrabschnitt 10, 110, 210 sind im Wesentlichen rohr- bzw. hohlzylinderförmig ausgebildet. Die beiden Gehäuserohrabschnitte 20, 30, 120, 130, 220, 230, der Hauptgehäuserohrabschnitt 10, 110, 210, der Ventilkörper 41, 141, 241 und/oder der Ventilsitz 42, 142, 242 sind vorzugsweise aus Metall ausgebildet.

Der Hauptgehäuserohrabschnitt 110, 210 der zweiten und dritten Ausführungsform der Absperrarmatur 101, 201 weist zusätzlich eine an einem Vorsprung 112, 212 ausgebildete Befestigungsöse 113, 213 und einen Gewindestift 114, 214 auf. Ferner weist die dritte Ausführungsform der Absperrarmatur 201 einen mit einem Stopfen 216 verschlossenen Anschluss 215 auf, an den ein Entleerungsventil 402 (siehe Figur 19) angeschlossen werden kann. Die Absperrarmaturen 101, 201 weisen ferner am zweiten Fluidende 103, 203 eine Überwurfmutter 131, 231 auf, mit welcher die zweite Fluidöffnung 103, 203 mit einem entsprechenden Anschluss verbunden werden kann.

Das Ventil 40, 140, 240 weist einen drehbar gelagerten Kegel 41, 141, 241 auf, der in der geschlossenen Position gegen einen Ventilsitz 42, 142, 242 dichtend schließt. Der Ventilsitz 42, 142, 242 weist einen Absatz 42a, 142a, 242a auf, gegen den der Kegel 41, 141, 241 dichtend schließen kann, für den Fall, dass das als Teflondichtung ausgebildete Dichtelement 43, 143, 243 versagen sollte. Das Dichtungselement 43, 143, 243 ist durch einen Sprengring 44, 144, 244 in seiner Lage axial gesichert. Der Ventilsitz 42, 142, 242 ist vorzugsweise am zweiten Gehäuserohrabschnitt 30, 130, 230 ausgebildet.

Der drehbar gelagerte Dichtungskegel 41, 141, 241 ist über eine Mutter 45, 145, 245 und einen Führungsring 46, 146, 246 mit einer Schiebehülse 60, 160, 260 verbunden. Die Schiebehülse 60, 160, 260 weist zwei radial nach außen ragende Zapfen 61, 161, 261 auf, welche durch geschlitzte Ausnehmungen 11, 111, 211 im Hauptgehäuserohrabschnitt 10, 110, 210 ragen. Die Ausnehmungen 11, 111, 211 sind als offene Langlöcher bzw. Schlitze ausgebildet, die bis an das mit dem zweiten Gehäuserohrabschnitt 20, 120, 220 verbundene Ende des Hauptgehäuserohrabschnitts 10, 110, 210 reichen. Zur Stabilisierung dieses Endes des Hauptgehäuserohrabschnitts 10, 110, 210 und zur Unterstützung der Verbindung zwischen dem Hauptgehäuserohrabschnitt 10, 110, 210 und dem ersten Gehäuserohrabschnitt 20, 120, 220 ist eine ringförmige Verbindungshülse 70, 170, 270 vorgesehen, die den Verbindungsbereich zwischen dem Hauptgehäuserohrabschnitt 10, 110, 210 und dem ersten Gehäuserohrabschnitt 20, 120, 220 außenumfänglich umgibt und die geschlitzten Ausnehmungen 11, 111, 211 abschnittsweise überdeckt. Die Verbindungshülse 70, 170, 270 ist mit dem Hauptgehäuserohrabschnitt 10, 110, 210 fest verschraubt. Die Verbindungshülse 70, 170, 270 stellt für einen Fortsatz 52b, 152b, 252b des zweiten Betätigungselements 52, 152, 252 ferner eine Führung dar.

Zur Betätigung des Ventilkörpers 41, 141,241 über die Schiebehülse 60, 160, 260 sind Betätigungsmittel 50, 150, 250 vorgesehen, welche ein erstes Betätigungselement 51, 151, 251 und ein zweites Betätigungselement 52, 152, 252 aufweisen. Die Betätigungsmittel 50, 150, 250 können durch eine Drehung um die Längsachse X des Hauptgehäuserohrabschnitts 10, 110, 210 betätigt werden, vorzugsweise in einer Schraubbewegung. Hierzu weist das erste Betätigungselement 51, 151, 251 ein Innengewinde auf, das in ein entsprechend ausgebildetes Außengewinde des Hauptgehäuserohrabschnitts 10, 110, 210 eingreift. In ein Außengewinde des ersten Betätigungselements 51, 151, 251 greift ein entsprechend ausgebildetes Innengewinde des zweiten Betätigungselements 52, 152, 252 ein, wobei diese Verschraubung vorzugsweise verklebt ist. Am zweiten Betätigungselement 52, 152, 252 ist ein erstes, im Wesentlichen ringförmiges Anschlagelement 52a, 152a, 252a ausgebildet, das bei einer Betätigung der Betätigungsmittel 50, 150, 250 die Schiebehülse 60, 160, 260 über die beiden Zapfen 61, 161, 261 in Richtung der Längsachse X bewegt. Die Schiebehülse 60, 160, 260 erfährt dabei vorzugsweise nur eine Bewegung entlang der Längsachse X und keine Drehung um diese Achse. Über die Verbindung des Ventilkörpers 41, 141, 241 über die Mutter 45, 145, 245 und den Führungsring 46, 146, 246 mit der Schiebehülse 60, 160, 260 wird somit die Dreh- oder Schraubbewegung der Betätigungsmittel 50, 150, 250 in eine längsaxiale Bewegung des Ventilkörpers 41, 141, 241 auf den Ventilsitz 42, 142, 242 zu umgesetzt.

Das Anschlagelement 52a, 152a, 252a bildet zusammen mit der Verbindungshülse 70, 170, 270 einen festen Endanschlag für die Öffnungs-Bewegung.

Ferner ist ein zweites, ringförmiges Anschlagelement 52c, 152c, 252c vorgesehen, welches eine Verklemmung der Zapfen 61, 161, 261 im Gewinde bzw. der Gewindephase der Betätigungsmittel 50, 150, 250 verhindert.

Die Schiebehülse 60, 160, 260 ist innerhalb des Hauptgehäuserohrabschnitts 10, 110, 210 angeordnet und gegenüber diesem durch zwei O-Ringe 82, 182, 282 abgedichtet. Ein Abschnitt des ersten Gehäuserohrabschnitts 20, 120, 220 ist innerhalb der Schiebehülse 60, 160, 260 angeordnet und gegenüber dieser über zwei weitere O-Ringe 81, 181, 281 abgedichtet. Diese Ausgestaltung hat den Vorteil, dass zum einen die Gewindeverbindung zwischen dem Hauptgehäuserohrabschnitt 10, 110, 210 und dem ersten Betätigungselement 51, 151, 251 zur Übertragung des Betätigungsmoments nicht medienberührt und daher frei von Ablagerungen ist und ferner auf den bewegten Flächen insbesondere der Schiebehülse 60, 160, 260 keine oder nur wenige Ablagerungen entstehen können, da der nicht medienberührte Flächenbereich hinter dem Betätigungsgewinde sich beim Schließen über die entsprechenden O-Ringe bewegt.

Die Absperrarmatur 201 gemäß der dritten Ausführungsform weist gegenüber den Absperrarmaturen 1, 101 der ersten beiden Ausführungsformen eine zusätzliches Längenausgleichselement 230a auf, das am zweiten Gehäuserohrabschnitt 230 der Absperrarmatur 201 vorgesehen ist. Das Längenausgleichselement 230a ist ebenfalls im Wesentlichen rohr- oder hohlzylinderförmig und, zumindest abschnittsweise, innerhalb des zweiten Gehäuserohrabschnitts 230 angeordnet und gegenüber diesem radial mit zwei O-Ringen 283 abgedichtet. Das Längenausgleichselement 230a ist gegenüber dem zweiten Gehäuserohrabschnitt 230 längsverschieblich gelagert und kann vorzugsweise, beispielsweise zu Montage-, Demontage- oder Wartungszwecken, von dem zweiten Gehäuserohrabschnitt 230 entfernt und vorzugsweise wieder angebracht werden. Durch diese lösbare Befestigung des Längenausgleichselements 230a am zweiten Gehäuserohrabschnitt 230 kann beispielsweise der Einbau, Ausbau oder Austausch eines Rückflussverhinderungsventils 231a im Längenausgleichselement 230a erleichtert werden.

Das Längenausgleichselement 230a weist zwei axiale Stirnseiten 232a, 233a auf, deren Flächen im Wesentlichen gleich groß sind. Auf diese Weise wird sichergestellt, dass die durch den Fluiddruck beaufschlagten Flächen der axialen Stirnseiten ausgeglichen sind und keine durch unterschiedlich große Angriffsflächen verursachten Kräfte auftreten. Das Längenausgleichselement 230a dient zum einen dazu, einen gewünschten Abstand zwischen den beiden Fluidöffnungen 202, 203 einzustellen. Ferner dient die längsverschiebliche Lagerung des Längenausgleichselements 230a im zweiten Gehäuserohrabschnitt 230 dazu, kleinere relative Bewegungen zwischen dem Längenausgleichselement 230a und dem zweiten Gehäuserohrabschnitt 230 zu ermöglichen, um durch äußere Kräfte oder beispielsweise Temperaturschwankungen verursachte Spannungen zu kompensieren und daher unerwünschte Krafteinwirkungen in der Absperrarmatur 201 sowie angrenzenden Leitungen und/oder Funktionselementen zu reduzieren.

Als Alternative zu dem separaten Rückflussverhinderungsventil 231a könnte in einer weiteren (nicht dargestellten) Ausführungsform das Ventil der Absperrarmatur auch als Rückschlagventil ausgebildet sein, welches einen Durchfluss nur in einer Richtung zulässt. Dazu wird der Ventilkörper vorzugsweise mittels einer Druckfeder auf den Ventilsitz gepresst und damit in die geschlossene Position gedrückt. Am Ventilkörper ist vorzugsweise eine Druckfläche ausgebildet, welche zu der Fluidöffnung weist, die als Eingangsöffnung dienen soll. Über die Druckfläche kann ein an der als Einlassöffnung dienenden Fluidöffnung anliegender Druck den Ventilkörper vom Ventilsitz gegen die Kraft der Feder abheben und hierdurch einen Durchfluss durch das Ventil ermöglichen. In umgekehrter Flussrichtung und bei folglich umgekehrten Druckverhältnissen wird jedoch der Ventilkörper vorzugsweise auf den Ventilsitz gepresst, insbesondere einerseits durch die Druckfeder und andererseits durch den auf der Rückseite des Ventilkörpers anliegenden Druck, so dass ein Rückfluss zuverlässig verhindert wird.

In den Figuren 15 bis 26 ist eine Wasserzählergarnitur 1000 dargestellt, in der zwei Absperrarmaturen 101, 201 gemäß der zweiten und dritten Ausführungsform zum Einsatz kommen. Die Wasserzählergarnitur weist eine Wandhalterung 300 sowie zwei Halteelemente 310 auf, an denen die Absperrarmaturen 101, 201 mittels der Befestigungsösen 113, 213 und der Gewindestifte 114, 214 angeordnet werden können. Die Wandhalterung 300 weist zwei Ausnehmungen 301a, b auf, über die die Wandhalterung 300 waagerecht oder senkrecht mittels der Befestigungselemente 401 an einer Wand angebracht werden kann. Ferner weist die Wandhalterung 300 Ausnehmungen 302a, b, 303a, b auf zur Aufnahme der Halteelemente 310. Durch Verwendung der unterschiedlichen Ausnehmungen 302 a, b, 303a, b können unterschiedliche Abstände der Halteelemente 310 realisiert werden, so dass unterschiedlich dimensionierte Wasseruhren in der Wasserzählerarmatur angeordnet werden können.

Die Halteelemente 310 weisen einen zentralen Führungsstift 314, einen Gewindestift 311, eine Mutter 312 und eine Unterlegscheibe 313 auf und dienen dazu, Absperrarmaturen 101, 201 über deren Befestigungsösen 113, 213 aufzunehmen und zu halten. Die Befestigung erfolgt dabei vorzugsweise über die Gewindestifte 311, 114, 214.

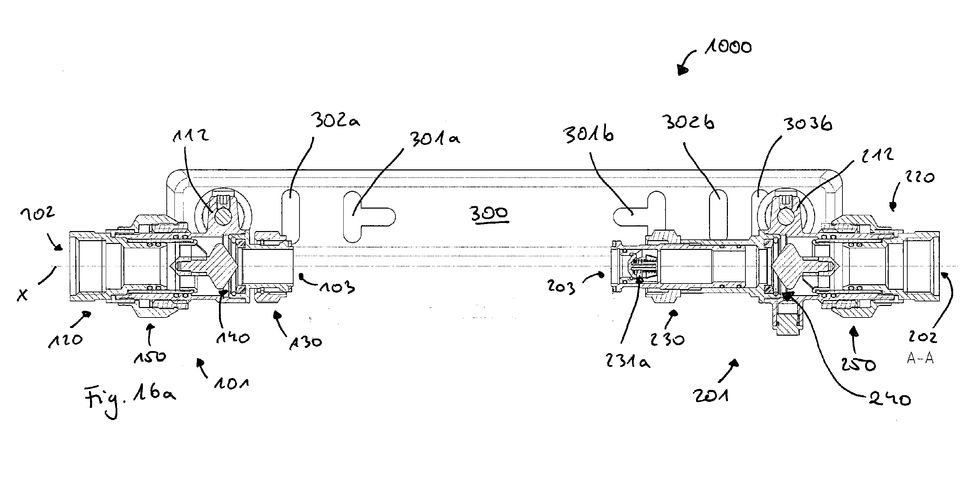

Wie insbesondere in Figur 16a zu erkennen ist, ist die Absperrarmatur 101 so angeordnet, dass sie von ihrer ersten Fluidöffnung 102 zur zweiten Fluidöffnung 103 hin durchströmt wird, und die zweite Absperrarmatur 201 ist derart angeordnet, dass sie von ihrer zweiten Fluidöffnung 203 zur ersten Fluidöffnung 202 hin durchströmt wird und ein Rückfluss durch das Rückflussverhinderungsventil 231a verhindert wird.

Die erfindungsgemäße Absperrarmatur 1 gemäß der ersten Ausführung kann insbesondere als einzelnes Absperrorgan oder Einzelregulierventil eingesetzt werden und kann auch ohne einen kraftaufnehmenden Wasserzählerbügel durch die erfindungsgemäße Konstruktion von außen einwirkende Kräfte durch die feste Verbindung der Gehäuserohrabschnitte 20, 30 mit dem Hauptgehäuserohrabschnitt 10 kompensieren und so eine Verkantung oder Verklemmung der Betätigungsmittel 50 verhindern oder reduzieren.

Die erfindungsgemäßen Absperrarmaturen 101, 201 gemäß der zweiten Ausführungen können vorzugsweise in einer Wasserzählergarnitur 1000 eingesetzt werden. Die hat zum einen Vorteile aufgrund des Längenausgleichselements 230a, insbesondere die Möglichkeit der Anpassung an verschiedene Baugrößen von Wasserzählergarnituren und Wasserzählern und die Kompensation von Kräften, insbesondere von Längskräften, durch die längsverschiebliche Lagerung des Längenausgleichselements 230a im zweiten Gehäuserohrabschnitt 230. Zum anderen ergeben sich Vorteile insbesondere durch die Verbindung der Gehäuserohrabschnitte 120, 130, 220, 230 mit dem Hauptgehäuserohrabschnitt 110, 210 (hier als verklebte Gewinde-bzw. Schraubverbindungen realisiert) und die dadurch mögliche Aufnahme von äußeren Kräften ohne das Risiko eines Verkantens oder Verklemmens bzw. Blockierens der Betätigungsmittel 150, 250 und der weiteren, für die Öffnungs- bzw. Schließbewegung erforderlichen beweglichen Teile, wie z.B. Schiebehülse 160, 260 und Ventilkörper 141, 241.

Die Wandhalterungsplatte 300 sowie die Halteelemente 310 der Wasserzählergarnitur 1000 leichter und damit kostengünstiger ausgebildet werden und auch Montageaufwand eingespart werden, da die bei früheren Absperrarmaturen erforderliche exakte axiale Ausrichtung zur Verhinderung von Blockaden bei den erfindungsgemäßen Absperrarmaturen nicht mehr notwendig ist.

## Patentansprüche

1. Absperrarmatur, umfassend
einen Durchflusskanal, der eine erste und eine zweite Fluidöffnung miteinander verbindet, und ein im Durchflusskanal angeordnetes Ventil, umfassend einen Ventilsitz und einen relativ zu dem Ventilsitz bewegbaren Ventilkörper, welcher in einer ersten, geschlossenen Stellung dichtend auf dem Ventilsitz aufliegt und den Durchflusskanal versperrt und in einer zweiten, geöffneten Stellung einen Durchflussquerschnitt zwischen Ventilsitz und Ventilkörper ausbildet und den Durchflusskanal freigibt, sowie Betätigungsmittel zum Erzeugen einer Relativbewegung zwischen Ventilkörper und Ventilsitz, wobei
- die erste Fluidöffnung an einem ersten Gehäuserohrabschnitt angeordnet ist, in dem ein sich von der ersten Fluidöffnung erstreckender erster Abschnitt des Durchflusskanals ausgebildet ist,
- die zweite Fluidöffnung an einem zweiten Gehäuserohrabschnitt angeordnet ist, in dem ein sich von der zweiten Fluidöffnung erstreckender zweiter Abschnitt des Durchflusskanals ausgebildet ist,
- zwischen dem ersten und dem zweiten Gehäuserohrabschnitt ein Hauptgehäuserohrabschnitt angeordnet ist, in dem sich ein Zwischenabschnitt des Durchflusskanals erstreckt,
wobei ferner der erste Gehäuserohrabschnitt und der Hauptgehäuserohrabschnitt fest verbunden oder einstückig ausgebildet sind und der zweite Gehäuserohrabschnitt und der Hauptgehäuserohrabschnitt fest verbunden oder einstückig ausgebildet sind, und die Betätigungsmittel derart beweglich am Hauptgehäuserohrabschnitt angeordnet sind, dass eine Betätigung der Betätigungsmittel eine Relativbewegung zwischen Ventilsitz und Ventilkörper in Richtung einer Längsachse des Hauptgehäuserohrabschnitts erzeugt.

2. Absperrarmatur nach dem vorhergehenden Anspruch,
**dadurch gekennzeichnet, dass** der erste und zweite Gehäuserohrabschnitt mit dem Hauptgehäuserohrabschnitt formschlüssig und/oder stoffschlüssig verbunden sind, vorzugsweise durch eine Schraubverbindung und/oder eine Klebeverbindung.

3. Absperrarmatur nach mindestens einem der vorhergehenden Ansprüche,
**dadurch gekennzeichnet, dass** die Betätigungsmittel mit dem Ventilkörper über eine, vorzugsweise im Wesentlichen ring- oder hohlzylinderförmige, Schiebehülse verbunden sind, welche bei einer, vorzugsweise rotatorischen, Betätigung der Betätigungsmittel eine Bewegung entlang der Längsachse des Hauptgehäuserohrabschnitts erfährt, wobei ferner vorzugsweise die Schiebehülse gegenüber dem ersten Gehäuserohrabschnitt und/oder dem Hauptgehäuserohrabschnitt durch mindestens ein Dichtungselement, vorzugsweise radiale Ringdichtung, insbesondere einen O-Ring, vorzugsweise zwei O-Ringe, abgedichtet ist.

4. Absperrarmatur nach dem vorhergehenden Anspruch,
**dadurch gekennzeichnet, dass** die Schiebehülse einen, vorzugsweise zwei, drei oder mehrere, radial nach außen ragende Zapfen aufweist, welche durch mindestens eine, vorzugsweise geschlitzte, Ausnehmung im Hauptgehäuserohrabschnitt ragen.

5. Absperrarmatur nach mindestens einem der vorhergehenden Ansprüche,
**dadurch gekennzeichnet, dass**
- die Betätigungsmittel mindestens ein erstes, vorzugsweise im Wesentlichen ringförmiges, Anschlagelement aufweisen, welches vorzugsweise angeordnet und ausgebildet ist, bei einer, vorzugsweise rotatorischen, Schließbetätigung der Betätigungsmittel die Schiebehülse über den bzw. die Zapfen in Richtung der Längsachse des Hauptgehäuserohrabschnitts zu bewegen; und/oder
- die Betätigungsmittel mindestens ein zweites, vorzugsweise im Wesentlichen ringförmiges, Anschlagelement aufweisen, welches vorzugsweise angeordnet und ausgebildet ist, bei einer, vorzugsweise rotatorischen, Öffnungsbetätigung der Betätigungsmittel die Schiebehülse über den bzw. die Zapfen in Richtung der Längsachse des Hauptgehäuserohrabschnitts zu bewegen.

6. Absperrarmatur nach dem vorhergehenden Anspruch,
**dadurch gekennzeichnet, dass** das mindestens eine erste und das mindestens eine zweite Anschlagelement angeordnet und ausgebildet sind, über den bzw. die Zapfen eine Bewegung der Schiebehülse entlang der Längsachse des Hauptgehäuserohrabschnitts relativ zu den Betätigungsmitteln in entgegengesetzter Richtung zu begrenzen.

7. Absperrarmatur nach mindestens einem der vorhergehenden Ansprüche, **gekennzeichnet durch** eine Verbindungshülse, welche, vorzugsweise außenumfänglich, in einem Verbindungsbereich des ersten oder zweiten Gehäuserohrabschnitts an dem Hauptgehäuserohrabschnitt angeordnet ist, und welche ferner vorzugsweise die, vorzugsweise geschlitzte, mindestens eine Ausnehmung im Hauptgehäuserohrabschnitt für den bzw. die Zapfen der Schiebehülse zumindest abschnittsweise überdeckt.

8. Absperrarmatur nach mindestens einem der vorhergehenden Ansprüche, **dadurch gekennzeichnet, dass** die Verbindungshülse fest mit dem Hauptgehäuserohrabschnitt verbunden ist, vorzugsweise formschlüssig und/oder stoffschlüssig, insbesondere durch eine Schraub- und/oder Klebeverbindung.

9. Absperrarmatur nach mindestens einem der vorhergehenden Ansprüche, **dadurch gekennzeichnet, dass** die Verbindungshülse derart angeordnet und ausgebildet ist, dass sie eine Führung, vorzugsweise in Richtung der Längsachse des Hauptgehäuserohrabschnitts, mindestens eines Teils der Betätigungsmittel darstellt.

10. Absperrarmatur nach mindestens einem der vorhergehenden Ansprüche, **dadurch gekennzeichnet, dass** die mindestens eine Ausnehmung in dem Hauptgehäuserohrabschnitt und/oder die Verbindungshülse einen Anschlag für eine Bewegung des bzw. der Zapfen der Schiebehülse entlang der Längsachse des Hauptgehäuserohrabschnitts relativ zu dem Hauptgehäuserohrabschnitt darstellt.

11. Absperrarmatur nach mindestens einem der vorhergehenden Ansprüche, **dadurch gekennzeichnet, dass** die Betätigungsmittel ein erstes, im Wesentlichen ringförmiges Betätigungselement und ein zweites, im Wesentlichen ringförmiges Betätigungselement aufweisen, wobei das erste Betätigungselement einen Innengewindeabschnitt aufweist, der in einen entsprechend ausgebildeten Außengewindeabschnitt des Hauptgehäuserohrabschnitts eingreift, und das zweite Betätigungselement fest mit dem ersten Betätigungselement verbunden ist, vorzugsweise formschlüssig und/oder stoffschlüssig, insbesondere durch eine Schraub- und/oder Klebeverbindung.

12. Absperrarmatur nach mindestens einem der vorhergehenden Ansprüche,
**dadurch gekennzeichnet, dass** der zweite Gehäuserohrabschnitt ein Längenausgleichselement aufweist, an dem die zweite Fluidöffnung ausgebildet ist und welches in abgedichteter Weise derart an dem zweiten Gehäuserohrabschnitt angeordnet ist, dass eine Relativbewegung des Längenausgleichselements zum zweiten Gehäuserohrabschnitt in Richtung der Längsachse des Hauptgehäuserohrabschnitts möglich ist.

13. Absperrarmatur nach mindestens einem der vorhergehenden Ansprüche,
**dadurch gekennzeichnet, dass**
- das Längenausgleichselement an dem zweiten Gehäuserohrabschnitt lösbar befestigt ist; und/oder
- zumindest ein Abschnitt des Längenausgleichselements radial abgedichtet, zumindest abschnittsweise, innerhalb des zweiten Gehäuserohrabschnitts angeordnet ist; und/oder
- das Längenausgleichselement zwei axiale Stirnseiten aufweist, deren Flächen im Wesentlichen gleich groß sind.

14. Absperrarmatur nach mindestens einem der vorhergehenden Ansprüche,
**dadurch gekennzeichnet, dass** das Ventil als Regulierventil ausgebildet ist, wobei der Ventilkörper und/oder der Ventilsitz derart ausgebildet und angeordnet ist bzw. sind, dass das Ventil in Abhängigkeit von der Stellung der Betätigungsmittel von einer definierten Durchflussmenge durchströmbar ist.

15. Hausanschlussarmatureinheit, umfassend eine mit einer der beiden Fluidöffnungen mit einem Hausfluideingang verbundene erste Absperrarmatur nach einem der vorhergehenden Ansprüche, und einen mit der anderen der beiden Fluidöffnungen der ersten Absperrarmatur verbundenen Fluidzähler.

16. Hausanschlussarmatureinheit, umfassend eine mit einer von zwei Fluidöffnungen mit einem Hausfluideingang verbundene erste Absperrarmatur, vorzugsweise eine Absperrarmatur nach einem der vorhergehenden Ansprüche 1-14, einen mit seiner Eingangsöffnung mit der anderen der beiden Fluidöffnungen der ersten Absperrarmatur verbundenen Fluidzähler und eine mit einer der beiden Fluidöffnungen mit der Auslassöffnung des Fluidzählers verbundene zweite Absperrarmatur nach einem der vorhergehenden Ansprüche.
